# EUROPEAN PATENT SPECIFICATION

(11) **EP 0 939 564 B1**
(45) Date of publication and mention of the grant of the patent: **09.11.2005**
(21) Application number: 99400279.8
(22) Date of filing: 08.02.1999
(51) Int. Cl.: H04Q 7/24, H04Q 7/38

(54) **Emergency call setup in a TDD system**
Gesprächsaufbau für Notrufe in einem TDD System
Etablissement d'appels d'urgence dans un système TDD

(30) Priority: 26.02.1998 ES 9800420
(43) Date of publication of application: 01.09.1999
(73) Proprietor: ALCATEL, 75008 Paris (FR)
(72) Inventor: Sanz Gomez, Rafael, 28005 Madrid (ES)
(74) Representative: Lamoureux, Bernard

(56) References cited:
- WO-A-97/16931
- US-A- 5 239 678

## Description

### OBJECT OF THE INVENTION

The present invention refers to a method whereby a subscriber to a telecommunications system sets up an emergency call when the radio channels of said system are busy.

More specifically, the method for setting up the emergency call of the invention is of special application, but not exclusively, in a digital cordless telecommunications (DECT) system, where the traffic density is high and the radio resources are limited.

### STATE OF THE ART

The patent U.S. 4,839,892 describes a telecommunications system formed by a fixed unit and a number of remote units connected by means of radio channels, in which said radio channels are being constantly monitored to detect when they are all busy. When this occurs, the system generates a traffic congestion tone.

If, simultaneously with the detection of traffic congestion, a subscriber requests access to the system, he will hear a congestion tone and will not make the call.

However, if the call he wishes to make is for an emergency, the subscriber must indicate this to the fixed unit by means of a "hook flash"; on hearing the hook flash, the fixed unit sends back dial tone.

When the called number has been received by the fixed unit, said number is compared with the numbers stored in a list which has been previously introduced in said unit. If the number called matches with one of those contained in the list, the emergency call is set up over one of the channels reserved for this purpose.

So, at least two radio channels are permanently reserved for this purpose in each frame, for example channels 1 and 2. The permanent reservation of radio channels places a limitation on the system, for example in business areas where the traffic density is very high. As a result, the system described in said patent does not offer an attractive service, either for the carrier or for a subscriber, since a subscriber will encounter difficulties in setting up a call during certain periods of the day due to the limitation on the number of radio channels available for normal traffic, for example.

So, the number of calls that can be set up is less than the number of radio channels present in the frame, as there are at least two radio channels permanently reserved.

As a consequence of the emergency call not being treated as a normal call, the subscriber has to know the specific procedure for setting up an emergency call when he hears a congestion tone in his terminal. Thus, an emergency call in said telecommunications system cannot be made by a person who is unfamiliar with said system. In order for him (her) to make the emergency call, he (she) must first receive instruction in how to set up said emergency call.

This last aspect represents a drawback since the situation can arise in which the subscriber is unable to make the emergency call or cannot complete the whole process. An emergency service therefore does not have the possibility of assisting the subscriber to said telecommunications system.

Moreover, the telecommunications system carrier cannot alter, depending on the service conditions, the number of simultaneous emergency calls that can be set up in said system.

WO-A-97/16931 teaches a GSM system receiving a signal from a mobile station requesting service and, if the signal contains information identifying the service request as an emergency, a dedicated channel SDCCH is temporarily allocated to service the mobile station when the traffic channels are busy, while simultaneously tearing down a traffic channel busy with a normal call. When the traffic channel has been freed up, the emergency call is moved to the traffic channel, while simultaneously freeing up the dedicated channel SDCCH.

### CHARACTERISATION OF THE INVENTION

An object of this invention is to provide a method to set up an emergency call in a telecommunications system, whereby a subscriber to said system makes an emergency call, in any operating condition of said system, like an ordinary call. For the subscriber all calls are made in the same way and it is the telecommunications system that decides the type of call the subscriber wishes to make.

Another object of the method of the invention is to provide radio channels for emergency calls when this type of call coincides simultaneously with a traffic congestion in said system.

In addition, the carrier is provided with the possibility of fixing the number of simultaneous emergency calls that can be set up, this allocation being possible to be changed in the course of the day as a function of the service conditions.

The method of the invention for setting up an emergency call permits a subscriber to make a call simultaneously with the detection of a busy condition in all radio channels of the telecommunications system. So, when the subscriber wishes to make a call, the remote unit looks for a free channel and, on finding all the channels busy, introduces the call request in the duplex time slot of the pilot channel transmitted by the fixed unit.

The fixed unit receives the request for a link together with the called number, it compares said number with the numbers contained in a list which has been previously introduced in said fixed unit, by the telecommunications system carrier, and if it matches with one of the numbers contained in said list, the call is set up.

The fixed unit then sets up a new pilot channel for transmitting broadcast data by clearing a call already set up. The call cleared is not an emergency call already set up.
If this is not the case, the call is rejected and the subscriber hears a traffic congestion tone. In brief, the subscriber makes an emergency call in a manner identical to the subscriber wishes to make a call, the remote unit looks for a free channel and, on finding all the channels busy, introduces the call request in the duplex time slot of the pilot channel transmitted by the fixed unit.

The fixed unit receives the request for a link together with the called number, it compares said number with the numbers contained in a list which has been previously introduced in said fixed unit, by the telecommunications system carrier, and if it matches with one of the numbers contained in said list, the call is set up.

The fixed unit then sets up a new pilot channel for transmitting broadcast data by clearing a call already set up. The call cleared is not an emergency call already set up.

If this is not the case, the call is rejected and the subscriber hears a traffic congestion tone. In brief, the subscriber makes an emergency call in a manner identical to that of an ordinary call, it being the telecommunications system which acts to distinguish the type of call: ordinary or emergency call.

### BRIEF DESCRIPTION OF THE FIGURES

A more detailed explanation of the invention is provided in the following description, based on the attached figures, in which:
- figure 1 shows a block diagram of an implementation of a telecommunications system according to the invention,
- figure 2 shows a digital structure of a frame employed in a telecommunications system according to the invention,
- figure 3 shows a channels structure in a telecommunications system according to the invention, and
- figure 4 shows a channels structure employed in a preferred implementation of the invention.

### DESCRIPTION OF THE INVENTION

In making a description of the present invention, a digital cordless telecommunications system, DECT, will be taken as an example although it could be applied to any kind of telecommunications system in which the interchange of data between at least one fixed unit 13 and a set of remote units 14-i, where i=1, ..., n, uses a time division duplex (TDD) operating mode.

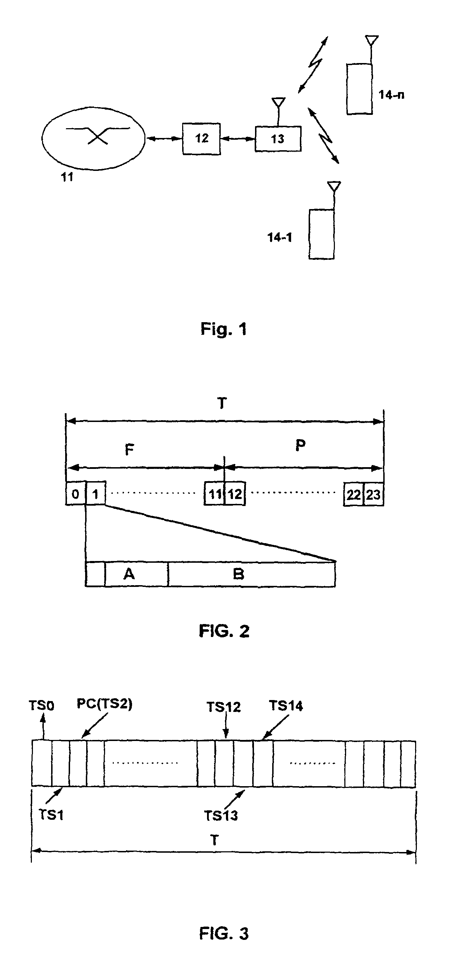

Figure 1 shows a block diagram of a telecommunications system in which the method to make an emergency call when all the traffic channels are busy is applied

A remote unit 14-i communicates by radio with the fixed unit 13 when it is inside the coverage area of said fixed unit 13. This latter fixed unit 13 transmits the traffic generated at and directed to the remote unit 14-i, to/from a telephone exchange 12 of a public switching telephone network 11, for example.

Figure 2 shows the structure of a frame T used to transmit the stream of information interchanged in both transmission directions, in half-frame F in the downstream direction, from the fixed unit 13 to the remote unit 14-i, and in half-frame P in the upstream direction, from the remote unit 14-i to the fixed unit 13. The structure used is that of a frame in time division duplex (TDD) mode, consisting of consecutive time slots TS0, ..., TS11 for transmission and TS12, ..., TS23 for reception, there being exactly 12 time slots or channels in each transmission direction F, P. A traffic channel is formed by a pair of time slots, for example TS0 and TS12 shown in figure 3, in alternating direction sharing the same bearer frequency. Thus, there are 12 duplex traffic channels numbered from 1 to 12.

Therefore, for a communication between the fixed unit 13 and the remote unit 14-i, the time slots used in the transmission occupy correlative positions in the upstream transmission direction P and in the downstream transmission direction F. Figure 3 shows a traffic channel constituted by time slots TS1 and TS13, for example.

The remote unit 14-i, for receiving and making calls has to be inside the coverage area of the fixed unit 13 and, also, must be locked in to said fixed unit 13. The remote unit 14-i will be locked in when it receives an information channel, namely pilot channel PC on time slot TS2 for example, transmitted by the fixed unit 13 to all the remote units 14-1, ..., 14-n that are within its coverage area.

The fixed unit 13 transmits in this pilot channel PC broadcast data such as frequencies it uses, its identity, the next frequency that it will tune to in reception in the following frame T and busy traffic channels.

At every moment, the fixed unit 13 is transmitting the pilot channel PC over a free time slot, for example time slot TS2. However, the duplex time slot TS14 of the pilot channel PC cannot be requested by the remote unit 14-i as a traffic channel.

The remote unit 14-i uses the information it obtains from the pilot channel PC at the moment when, on orders from the subscriber, it starts a call set-up procedure.

When the subscriber wishes to make a call, the remote unit 14-i in accordance with a time division multiple access (TDMA) multi-bearer mode of operation looks for a free channel (i.e. time slot in which no radio activity is detected) from among the time slots TS12, ..., TS23 of the upstream half-frame P, since within the information received in the pilot channel PC, the fixed unit 13 has indicated that there are free channels.

Over time slot TS13, one of the free time slots for example, and on the frequency that corresponds in the sequence, the remote unit 14-i sends a bearer request message, with its identity and the identity of the fixed unit 13, all this within the first forty bits of time slot TS13 (signalling field A shown in figure 2). The data relative to the communication, for example voice, are transmitted in the information field B of the time slot.

The fixed unit 13 verifies by comparison the number requested with the numbers, for example emergency numbers, contained in a table introduced in the fixed unit 13 by the carrier of the telecommunications system. If the number requested matches with one of those contained in the table, a counter is incremented in said fixed unit 13 and the traffic channel over which the emergency call is set up is registered.

If it does not coincide, there is also confirmation in the duplex time slot TS1 of the downstream half-frame F, in field A, of the use of traffic channel 2, formed by said pair of time slots TS1 and TS13, and from this moment traffic channel 2 is assigned to the remote unit 14-i until the link is interrupted.

With traffic channel 2 confirmed for maintaining the connection, both the fixed unit 13 and the remote unit 14-i, will use it first for signalling, for example information relative to the digits dialled, and then for sending voice, for example.

In the event that all the traffic channels, for example from 1 to 11, were busy and over traffic channel 12 the fixed unit 13 were transmitting the pilot channel PC, the remote unit 14-i will be unable to find a free traffic channel, and according to the method of the invention the remote unit 14-i makes an outgoing call request over the duplex time slot of the pilot channel PC (time slot TS23 of the upstream half-frame P).

The fixed unit 13 receives the request to set up a call and again compares the number requested with the numbers contained in said table.

If the number requested matches with one of the numbers contained in said table, the fixed unit 13 sends a confirmation message to the remote unit 14-i and, from this moment onwards, the emergency call is set up over the pilot channel PC, that is, said channel is used for traffic (signalling and traffic).

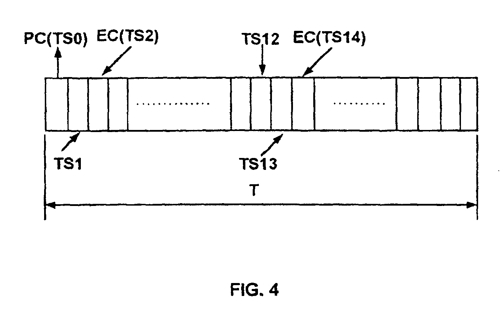

Figure 4 shows how the emergency call EC has been set up over the traffic channel 3 (time slots TS2 and TS14). Again the counter count is incremented and the traffic channel over which the link is set up is registered.

If the requested number does not match with any of those contained in the table, the call set up request is rejected.

Simultaneously with the establishment of the pilot channel PC as a traffic channel, the fixed unit 13 sets up a new pilot channel PC on one of the traffic channels occupied by an ordinary call.

To do this, the fixed unit 13 by means of a clearing procedure for calls already set up, clears a call already set up over a traffic channel. The cleared call is not an emergency call already in process.

The clearing procedure is based on a criterion of clearing the ordinary call which has been established for the longest time, for example.

Thus, the fixed unit 13 sets up a new pilot channel PC in the time slot TS0 of the downstream half-frame F, corresponding to the traffic channel of the cleared call. And in the signalling field A of the released time slot it transmits the broadcast data.

If the busy condition of all the traffic channels persists, and another subscriber wishes to make a call by means of his remote unit 14-1, said unit 14-1 uses the duplex time slot TS12 of the new pilot channel PC to implement the outgoing call request.

The fixed unit 13 receives the call set up request and, again, compares the requested number from the remote unit 14-1 with the emergency numbers contained in the table in the fixed unit 13.

If the requested number matches with one of the numbers of said table, the fixed unit 13 sets up the new emergency call over the new pilot channel PC. Next, said fixed unit 13 clears an ordinary call in order to establish a new pilot channel PC. The clearing procedure only verifies those traffic channels over which ordinary calls are established, consequently only this type of calls is cleared.

This last situation is a consequence of the fixed unit 13 storing the traffic channels over which emergency calls are set up in a control logic held in the counter, for example, and providing this information to the clearing process.

The carrier of the telecommunications system can limit the number of emergency calls that can be set up by the same fixed unit 13, during a situation of traffic congestion in said system, by means of the control logic. Also by means of said control logic the carrier can enable or inhibit the setting up of emergency calls, for example enabling the setting up of emergency calls as a function of the traffic density occurring in the course of the day.

The count in said counter is increased each time an emergency call is set up. And once the counter has reached the maximum number of simultaneous emergency calls that can be set up, the control logic generates a control signal to produce a traffic congestion tone which is sent to the remote units 14-1, ..., 14-n, in the signalling field A of the pilot channel PC. Moreover, the access to the duplex time slot of said pilot channel PC, by the remote units 14-1, ..., 14-n, is blocked by a signalling contained in said field A.

The control logic permits the carrier to vary the maximum number of emergency calls that can be established simultaneously as a function of the service conditions of the telecommunications system, for example as a function of the traffic that arises in the course of the day, thus if little traffic is expected, because it is a period of low traffic density, the number of permitted emergency calls can be raised.

## Claims

1. **Method for setting up an emergency call** in a telecommunications system comprising at least one fixed unit (13) and a set of remote units (14-1, ..., 14-n) which interchange information according to a time division duplex mode, TDD, and in which said fixed unit (13) transmits broadcast data relative to said telecommunications system in a time slot of a pilot channel (PC) sent in a downstream half-frame (F); **characterised in that** it comprises the steps of:
a) request for setting up an emergency call from a remote unit (14-i), by means of the reception time slot in an upstream half-frame (P) corresponding to said transmission time slot in the downstream half-frame (F), when the other transmission and reception time slots of a frame (T) are busy with previously set up calls,
b) verification of said emergency call by comparison with the numbers contained in a table stored in said fixed unit (13),
c) setting up of said emergency call over the pair duplex timeslots mentioned in step a), and
d) freeing up of a call already set up to set up in its transmission time slot a new transmission time slot to send said broadcast data.

2. **Method for setting up an emergency call** according to claim 1, **characterised in that** the freeing up of a call already set up is done based on a clearing procedure.

3. **Method for setting up an emergency call** according to claim 2, **characterised in that** said freeing up procedure verifies the transmission and reception time slots of said frame (T) corresponding only to ordinary calls already set up and not those corresponding to emergency calls.

4. **Method for setting up an emergency call** according to claim 1, **characterised in that** a new emergency call is set up by repeating the steps a), b), c) and d), when the busy condition of said transmission and reception time slots of said frame (T) persists.

5. **Method for setting up an emergency call** according to claim 4, **characterised in that** a limit is established in the number of simultaneous emergency calls that can be set up in said frame (T).

6. **Fixed unit** comprising means for carrying out the method of claim 1; **characterised in that** fixed unit further (13) comprises means for matching a received number from a mobile station with stored numbers related to emergency services for establishing the emergency call over the pilot channel (PC).

7. **Fixed unit** according to claim 6, **characterised in that** it comprises counting means for incrementing a its count each time an emergency call is set up.

8. **Fixed unit** (13) according to claim 7, **characterised in that** said counting means comprises control logic whereby they register the traffic channel over which an emergency call is set up.

9. **Fixed unit** (13) according to claim 8, **characterised in that** the fixed unit (13) is arranged to broadcast to all mobile units the traffic channel which is busy with a emergency call.

10. **Fixed unit** (13) according to claim 9, **characterised in that** the fixed unit (13) is arranged to store the traffic channel over the emergency call is setting up.

11. **Fixed unit** (13) according to claim 10, **characterised in that** the fixed unit (13) is arranged to free up an established call over a traffic channel for setting up a new pilot channel.

## Patentansprüche

1. **Verfahren zum Aufbauen eines Notrufs** in einem Telekommunikationssystem, umfassend mindestens eine Festeinheit (13) und eine Menge von abgesetzten Einheiten (14-1, ..., 14-n), welche Informationen gemäß einem Zeitduplexmodus TDD austauschen, und in welchem die Festeinheit (13) Broadcastdaten bezüglich des Telekommunikationssystems in einem Zeitschlitz eines Pilotkanals (PC) übermittelt, der in einem Downstream-Halbframe (F) gesendet wurde; **dadurch gekennzeichnet, daß** es die Schritte umfaßt.
a) Anforderung zum Aufbauen eines Notrufs von einer abgesetzten Einheit (14-i) mittels des Empfangens des Zeitschlitzes in einem Upstream-Halbframe (P), der dem Übertragungszeitschlitz in dem Downstream-Halbframe (F) entspricht, wenn die anderen Übertragungs- und Empfangszeitschlitze eines Frames (T) mit vorher aufgebauten Anrufen belegt sind,
b) Überprüfen des Notrufs durch Vergleichen mit der Anzahl der Nummern, die in einer Tabelle enthalten sind, die in der Festeinheit (13) gespeichert ist,
c) Aufbauen des Notrufs über die paarweisen Duplexzeitschlitze, die in Schritt a) erwähnt sind, und
d) Freimachen eines Anrufs, der bereits aufgebaut ist, um in seinem Übertragungszeitschlitz einen neuen Übertragungszeitschlitz aufzubauen, um Broadcastdaten zu senden.

2. **Verfahren zum Aufbauen eines Notrufs** nach Anspruch 1, **dadurch gekennzeichnet, daß** das Freimachen eines Anrufs, der bereits aufgebaut ist, auf der Basis einer Trennprozedur durchgeführt wird.

3. **Verfahren zum Aufbauen eines Notrufs** nach Anspruch 2, **dadurch gekennzeichnet, daß** die Prozedur des Freimachens die Übertragungs- und Empfangszeitschlitze des Frames (T) überprüft, die nur den normalen Anrufen entsprechen, die bereits aufgebaut sind, und nicht jene, die den Notrufen entsprechen.

4. **Verfahren zum Aufbauen eines Notrufs** nach Anspruch 1, **dadurch gekennzeichnet, daß** ein neuer Notruf durch Wiederholen der Schritte a), b), c) und d) aufgebaut wird, wenn der Besetztzustand der Übertragungs- und Empfangszeitschlitze des Frames (T) andauert.

5. **Verfahren zum Aufbauen eines Notrufs** nach Anspruch 4, **dadurch gekennzeichnet, daß** ein Grenzwert der Anzahl der gleichzeitigen Notrufe festgelegt ist, die in dem Frame (T) aufgebaut werden können.

6. **Festeinheit,** umfassend Mittel zum Durchführen des Verfahrens nach Anspruch 1; **dadurch gekennzeichnet, daß** die Festeinheit (13) außerdem Mittel zum Vergleichen einer empfangenen Nummer von einer Mobilstation mit den gespeicherten Nummern, die die Notrufdienste betreffen, zum Aufbauen des Notrufs über den Pilotkanal (PC) umfaßt.

7. Festeinheit nach Anspruch 6, **dadurch gekennzeichnet, daß** sie Zählvorrichtungen zum Erhöhen einer Zählung umfaßt, jedesmal wenn ein Notruf aufgebaut wird.

8. **Festeinheit** (13) nach Anspruch 7, **dadurch gekennzeichnet, daß** die Zählvorrichtungen die Steuerlogik umfassen, durch welche sie den Nutzkanal registrieren, über den ein Notruf aufgebaut ist.

9. **Festeinheit** (13) nach Anspruch 8, **dadurch gekennzeichnet, daß** die Festeinheit (13) angeordnet ist, um an alle Mobileinheiten den Nutzkanal zu senden, der mit einem Notruf belegt ist.

10. **Festeinheit** (13) nach Anspruch 9, **dadurch gekennzeichnet, daß** die Festeinheit (13) angeordnet ist, um den Nutzkanal zu speichern, über den der Notruf aufgebaut wird.

11. **Festeinheit** (13) nach Anspruch 10, **dadurch gekennzeichnet, daß** die Festeinheit (13) angeordnet ist, um einen aufgebauten Anruf über einen Nutzkanal zum Aufbauen eines neuen Pilotkanals freizumachen.

## Revendications

1. Procédé d'établissement d'un appel d'urgence dons un système de télécommunications comprenant au moins une unité fixe (13) et un ensemble d'unités distantes (14-1, ..., 14-n) qui échangent des informations dans un mode de duplexage temporel (TDD), et dans lequel ladite unité fixe (13) transmet des données à diffusion générale relatives audit système de télécommunications dans une tranche de temps d'un canal pilote (PC) envoyée dans une demi-trame aval (F) ; **caractérisé en ce qu'**il comprend les étapes de :
a) demande d'établissement d'un appel d'urgence par une unité distante (14-i), au moyen de la tranche de temps de réception dans une demi-trame amont (P) correspondant à ladite tranche de temps d'émission dans la demi-trame aval (F), quand les autres tranches de temps d'émission et de réception d'une trame (T) sont occupées par des appels établis antérieurement ;
b) vérification dudit appel d'urgence par comparaison à des numéros contenus dans une table mémorisée dans ladite unité fixe (13);
c) établissement dudit appel d'urgence sur la paire de tranches de temps duplex mentionnées à l'étape a) ; et
d) libération d'un appel déjà établi afin d'établir dans sa tranche de temps d'émission une nouvelle tranche de temps d'émission pour envoyer lesdites données à diffusion générale.

2. Procédé d'établissement d'un appel d'urgence selon la revendication 1, **caractérisé en ce que** la libération d'un appel déjà établi est effectué en fonction d'une procédure de déconnexion.

3. Procédé d'établissement d'un appel d'urgence selon la revendication 2, **caractérisé en ce que** la procédure de libération vérifie les tranches de temps d'émission et de réception de ladite trame (T) correspondant uniquement aux appels ordinaires déjà établis et non pas celles correspondant aux appels d'urgence.

4. Procédé d'établissement d'un appel d'urgence selon la revendication 1, **caractérisé en ce qu'**un nouvel appel d'urgence est établi en répétant les étapes a), b), c) et d), quand la condition d'occupation desdites tranches de temps d'émission et de réception de ladite trame (T) persiste.

5. Procédé d'établissement d'un appel d'urgence selon la revendication 4, **caractérisé en ce qu'**une limite du nombre d'appels d'urgence simultanés pouvant être établis dans ladite trame (T) est instaurée.

6. Unité fixe comprenant un moyen pour exécuter le procédé de la revendication 1 ; **caractérisée en ce que** l'unité fixe (13) comprend en outre un moyen pour comparer un numéro reçu d'une station mobile à des numéros mémorisés liés aux services d'urgence pour établir l'appel d'urgence sur le canal pilote (PC).

7. Unité fixe selon la revendication 6, **caractérisée en ce qu'**elle comprend un moyen de comptage pour incrémenter un compte chaque fois qu'un appel d'urgence est établi.

8. Unité fixe (13) selon la revendication 7, **caractérisée en ce que** ledit moyen de comptage comprend une logique de commande par laquelle il enregistre le canal de trafic sur lequel un appel d'urgence est établi.

9. Unité fixe (13) selon la revendication 8, **caractérisée en ce que** l'unité fixe (13) est agencée pour diffuser à toutes les unités mobiles le canal de trafic qui est occupé par un appel d'urgence.

10. Unité fixe (13) selon la revendication 9, **caractérisée en ce que** l'unité fixe (13) est agencée pour mémoriser le canal de trafic sur lequel l'appel d'urgence est établi.

11. Unité fixe (13) selon la revendication 10, **caractérisée en ce que** l'unité fixe (13) est agencée pour libérer un appel établi sur un canal de trafic pour établir un nouveau canal pilote.
